# EUROPÄISCHE PATENTSCHRIFT

(11) **EP 3 679 260 B1**
(45) Veröffentlichungstag und Bekanntmachung des Hinweises auf die Patenterteilung: **20.04.2022**
(21) Anmeldenummer: 18762006.7
(22) Anmeldetag: 21.08.2018
(51) Int. Cl.: F16D 1/04, F16D 1/08

(54) **ANORDNUNG ZUR KRAFTSCHLÜSSIGEN VERBINDUNG EINER ADAPTERWELLE MIT EINER WELLE MITTELS EINES SPANNRINGS**
ASSEMBLY FOR CONNECTING AN ADAPTER SHAFT TO A SHAFT IN A FORCE-FITTING MANNER USING A CLAMPING RING
ENSEMBLE PERMETTANT DE RÉALISER UN ASSEMBLAGE À FORCE ENTRE UN ARBRE ADAPTATEUR ET UN ARBRE AU MOYEN D'UN ANNEAU DE SERRAGE

(30) Priorität: 08.09.2017 DE 102017008435
(43) Veröffentlichungstag der Anmeldung: 15.07.2020
(73) Patentinhaber: SEW-EURODRIVE GmbH & Co. KG, 76646 Bruchsal (DE)
(72) Erfinder: SCHILLINGER, Jens, 76437 Rastatt (DE); HALLER, Sascha, 76135 Karlsruhe (DE); WÖPPERMANN, Markus, 76307 Karlsbad (DE)
(86) Internationale Anmeldenummer: PCT/EP2018/025219
(87) Internationale Veröffentlichungsnummer: WO 2019/048081

(56) Entgegenhaltungen:
- DE-A1-102011 013 887
- DE-A1-102013 018 551

## Beschreibung

Die Erfindung betrifft eine Anordnung zur kraftschlüssigen Verbindung einer Adapterwelle mit einer Welle mittels eines Spannrings.

Aus der US 2 221 371 A ist eine Verbindung einer Adapterwelle mit einer Welle mittels Spannring bekannt.

Aus der DE 10 2011 013 887 A1 ist als nächstliegender Stand der Technik eine Klemmkupplung zur drehfesten Verbindung einer Welle mit einer Nabe bekannt, bei der zwei einander diamtral gegenüber angeordnete Gewindestifte vorgesehen sind.

Aus der DE 10 2013 018 551 A1 ist eine Wellenkupplungsanordnung bekannt.

Der Erfindung liegt daher die Aufgabe zugrunde, eine kraftschlüssige Verbindung zwischen Welle und Adapterwelle weiterzubilden.

Erfindungsgemäß wird die Aufgabe bei der Anordnung nach den in Anspruch 1 angegebenen Merkmalen gelöst.

Wichtige Merkmale der Erfindung bei der Anordnung zur kraftschlüssigen Verbindung einer Adapterwelle mit einer Welle mittels eines Spannrings sind, dass der Spannring auf die Adapterwelle aufgesteckt ist,
wobei die Welle in die Adapterwelle eingesteckt ist,
wobei der Spannring eine radial durchgehende Gewindebohrung aufweist, in welche ein Schraubteil, insbesondere Gewindestift, eingeschraubt ist, das auf die Adapterwelle drückt,
wobei ein Zylinderbolzen in einer ersten Vertiefung des Spannrings aufgenommen ist, welcher nach radial innen in eine zweite Vertiefung, die in die Adapterwelle eingebracht ist, ragt, insbesondere hineinragt, insbesondere zur Bildung einer in Axialrichtung und in Umfangsrichtung wirkenden Verliersicherung und Verdrehsicherung.

Von Vorteil ist dabei, dass eine Verliersicherung gebildet ist, insbesondere sowohl in axialer Richtung als auch in Umfangsrichtung. Dabei ist die Erfindung einfach realisierbar und benötigt keine weiteren besonderen Mittel mit Ausnahme des Zylinderbolzens, also eines kreisscheibenartigen Teils. An der Adapterwelle ist ebenso wie an dem Spannring eine Vertiefung vorzusehen, so dass der Zylinderbolzen in beiden Vertiefungen aufnehmbar ist.

Infolge der Axialschlitze ist die Adapterwelle elastisch auslenkbar und somit andrückbar an die Hohlwelle, sobald der Gewindestift auf die Adapterwelle drückt. Dabei wird das Sich-Zusammenziehen, insbesondere das Aufschrumpfen, bewirkt. Für den Gewindestift ist eine durch den Spannring durchgängige Gewindebohrung vorhanden. Die Vertiefungen hingegen sind nicht durchgehend ausgeführt, insbesondere nicht an der Adapterwelle und auch nicht am Spannring.

Somit verbessert die Erfindung die Sicherheit einer kraftschlüssigen Verbindung zwischen Welle und Adapterwelle, indem ein Spannring zum Sich-Zusammenziehen, insbesondere Aufschrumpfen, der einen Hohlwellenberiech aufweisenden Adapterwelle verwendet ist, der verliersicher, insbesondere in axialer Richtung und in Umfangsrichtung verliersicher auf der Adapterwelle angeordnet ist.

Unter Aufschrumpfen wird hier stets nicht ein thermisch bedingtes Sich-Zusammenziehen, sondern ein mechanisch bedingtes Sich-Zusammenziehen verstanden.

Bei einer vorteilhaften Ausgestaltung weist die Adapterwelle Axialschlitze auf, insbesondere in Umfangsrichtung voneinander beabstandete Axialschlitze, insbesondere in Umfangsrichtung regelmäßig voneinander beabstandete Axialschlitze. Von Vorteil ist dabei, dass die Adapterwelle ohne großen Kraftaufwand verformbar ist und dass die Verformung keine Wellenbildung in Umfangsrichtung erlaubt. Denn ohne Axialschlitze bestünde das Risiko, dass die Adapterwelle beim Andrücken des Gewindestifts an die Adapterwelle keine in Umfangsrichtung umlaufend radial gerichtete sinuswellenartigen Verläufe herausbildet sondern dass die Adapterwelle möglichst gleichmäßig an der Vollwelle anliegt.

Bei einer vorteilhaften Ausgestaltung überlappt die zweite Vertiefung mit einem der Axialschlitze,

insbesondere also der von der zweiten Vertiefung axial überdeckte Bereich überlappt mit dem von dem Axialschlitz axial überdeckten Bereich und/oder also der von der zweiten Vertiefung in Umfangsrichtung überdeckten Bereich überlappt mit dem von dem Axialschlitz in Umfangsrichtung überdeckten Bereich. Von Vorteil ist dabei, dass der Zylinderbolzen zwei Bereiche der Adapterwelle gegen die Vollwelle drückt. Dabei ist ein geringfügiges Verschieben oder Ausdehnen der Bereiche in Umfangsrichtung oder entgegen der Umfangsrichtung, also zum Schlitzbereich hin ermöglicht.

**Erfindungsgemäß** ist der Zylinderbolzen als Scheibe ausgeführt, insbesondere als vollzylindrische Scheibe. Von Vorteil ist dabei, dass eine einfache kostengünstige Herstellung ermöglicht ist.

Bei einer vorteilhaften Ausgestaltung ist die Welle in einen als Hohlwellenbereich ausgeführten Bereich der Adapterwelle eingesteckt, insbesondere koaxial angeordnet ist zur Adapterwelle. Von Vorteil ist dabei, dass die Welle in der Adapterwelle aufnehmbar ist und dabei zur Drehachse der Adapterwelle zentriert ist.

Bei einer vorteilhaften Ausgestaltung münden der oder die Axialschlitze am axialen Ende der Adapterwelle in die Umgebungsluft. Von Vorteil ist dabei, dass die Adapterwelle eine hohe Elastizität im axialen Endbereich aufweist.

Bei einer vorteilhaften Ausgestaltung sind die erste Vertiefung und die zweite Vertiefung zueinander diametral angeordnet, insbesondere also ihre Schwerpunkte oder Mittelpunkte in Umfangsrichtung einen Abstand von 180° aufweisen. Von Vorteil ist dabei, dass die Anordnung ausgewuchtet ist. hierzu ist insbesondere wichtig, dass das für die erste Vertiefung bei der Herstellung herausgenommenen Materialvolumen dem für die zweite Vertiefung herausgenommenen Materialvolumen gleicht.

Bei einer vorteilhaften Ausgestaltung weist die Adapterwelle, insbesondere zwischen der zweiten Vertiefung und dem axialen Ende der Adapterwelle, an ihrem axialen Endbereich eine Fase, insbesondere Einführschräge, auf, welche beim Aufstecken des Spannrings auf den Zylinderbolzen zur zweiten Vertiefung hinführt. Von Vorteil ist dabei, dass beim Aufstecken des Spannrings auf die Adapterwelle der Zylinderbolzen in die zweite Vertiefung hineingeführt wird und nach der Aufnahme des Zylinderbolzens in der zweiten Vertiefung sich die Adapterwelle, insbesondere der axiale Endbereich, nach radial außen erweitert.

Bei einer vorteilhaften Ausgestaltung ist die Adapterwelle in einem axialen Bereich zwischen dem von der zweiten Vertiefung axial überdeckten Bereich und dem axialen Ende der Adapterwelle in dem von der zweiten Vertiefung in Umfangsrichtung überdeckten Bereich radial weniger ausgedehnt als in einem, insbesondere jedem, anderen, insbesondere in Umfangsrichtung, diametral gegenüberliegenden Bereich. Von Vorteil ist dabei, dass der Zylinderbolzen unter geringem Kraftaufwand in die zweite Vertiefung eingeführt wird und dann durch die elastische Ausdehnung der Adapterwelle gehalten ist.

Bei einer vorteilhaften Ausgestaltung nimmt der maximale Radialabstand der Adapterwelle in einem axialen Bereich zwischen dem von der zweiten Vertiefung axial überdeckten Bereich und dem axialen Ende der Adapterwelle vom von der zweiten Vertiefung in Umfangsrichtung überdeckten Bereich zum von der ersten Vertiefung in Umfangsrichtung überdeckten Bereich zu. Von Vorteil ist dabei, dass wiederum, dass ein Einführen des Zylinderbolzens in die zweite Vertiefung unter geringem Kraftaufwand ermöglicht ist und mit dem Wulst ein formschlüssiges zusätzliches axiales Sichern erreichbar ist, wenn der Spannring eine entsprechende Rücknahme an seiner Außenkante aufweist.

Bei einer vorteilhaften Ausgestaltung ist die erste Vertiefung rechteckförmig ausgeführt und/oder tangential ausgerichtet. Von Vorteil ist dabei, dass eine einfache Herstellung als tangentiale ebene Abflachung ausführbar ist.

Bei einer vorteilhaften Ausgestaltung ist die zweite Vertiefung rechteckförmig ausgeführt und/oder eine nicht durch die Adapterwelle hindurchgehende insbesondere kreisrunde Sacklochbohrung aufweist. Von Vorteil ist dabei, dass ebenfalls eine einfache Herstellung ausführbar ist.

Bei einer vorteilhaften Ausgestaltung weist der Verlauf des maximalen Radialabstands der Adapterwelle in axialer Richtung ein lokales Minimum im von der zweiten Vertiefung überdeckten axialen Bereich auf. Von Vorteil ist dabei, dass eine einfache Herstellung durchdrehende Bearbeitung der Adapterwelle erreichbar ist.

Bei einer vorteilhaften Ausgestaltung überlappt der von der ersten Vertiefung axial überdeckte Bereich mit dem von der zweiten Vertiefung axial überdeckten Bereich. Von Vorteil ist dabei, dass die beiden Vorrichtungen miteinander korrespondierend angeordnet sind und somit der Zylinderbolzen in beide hineinragbar anordenbar ist.

Bei einer vorteilhaften Ausgestaltung überlappt der von der ersten Vertiefung in Umfangsrichtung überdeckte Bereich mit dem von der zweiten Vertiefung in Umfangsrichtung überdeckten Bereich. Von Vorteil ist dabei, dass die beiden Vorrichtungen miteinander korrespondierend angeordnet sind und somit der Zylinderbolzen in beide hineinragbar anordenbar ist.

Bei einer vorteilhaften Ausgestaltung weist die Adapterwelle eine Fase, insbesondere Einführfase, auf, welche in Umfangsrichtung einen Umfangswinkelbereich überdeckt, der den von der zweiten Vertiefung überdeckten Umfangswinkelbereich enthält,
wobei - in Umfangsrichtung beabstandet von der Fase - an der Adapterwelle ein Wulst ausgebildet ist, welcher einen axialen Beriech überdeckt, der den von der Fase überdeckten axialen Bereich enthält,
insbesondere wobei der von dem Wulst in Umfangsrichtung überdeckte Beriech den von der Abflachung in Umfangsrichtung überdeckten Bereich enthält,
insbesondere wobei der von der Fase überdeckte Radialabstandsbereich radial innerhalb von dem von dem Wulst überdeckten Radialabstandsbereich angeordnet ist oder sich nach radial innen radial anschließt. Von Vorteil ist dabei, dass im selben axialen Bereich eine formschlüssige Sicherung des Schraubteils und auch eine Einführfase, also eine nicht formschlüssige Aufnahme für den Zylinderbolzen, vorhanden ist. Im selben axialen Beriech sind also zwei völlig verschiedene Funktionen erzielt.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von schematischen Abbildungen näher erläutert:
In der Figur 1 ist ein Längsschnitt durch eine Spanneinheit, aufweisen eine Adapterwelle 1 mit aufgestecktem Spannring 4, dargestellt.

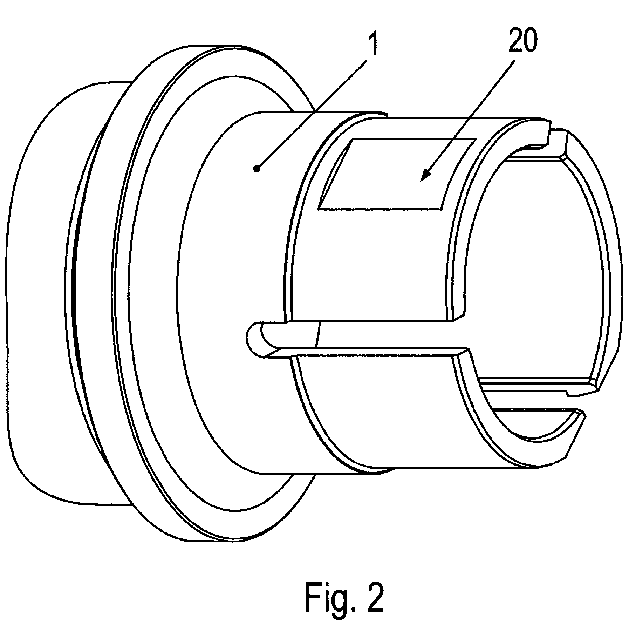

In der Figur 2 ist eine Schrägansicht aus einer ersten Blickrichtung auf die Adapterwelle 1 dargestellt.

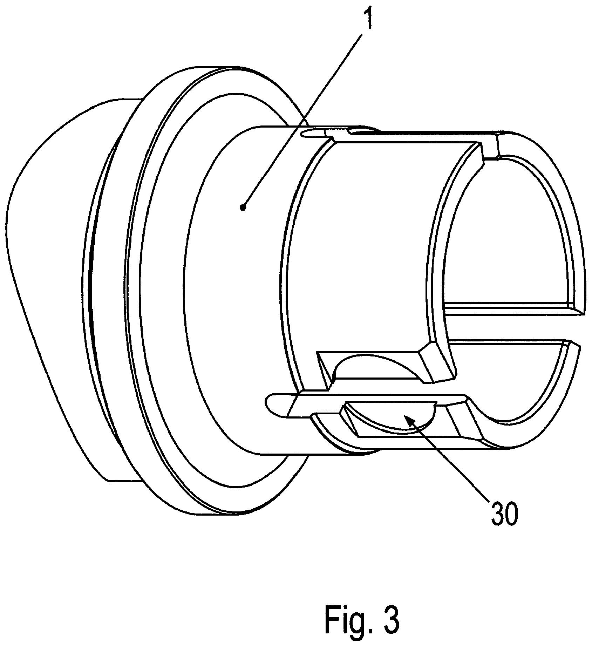

In der Figur 3 ist eine Schrägansicht aus einer anderen Blickrichtung auf die Adapterwelle 1 dargestellt.

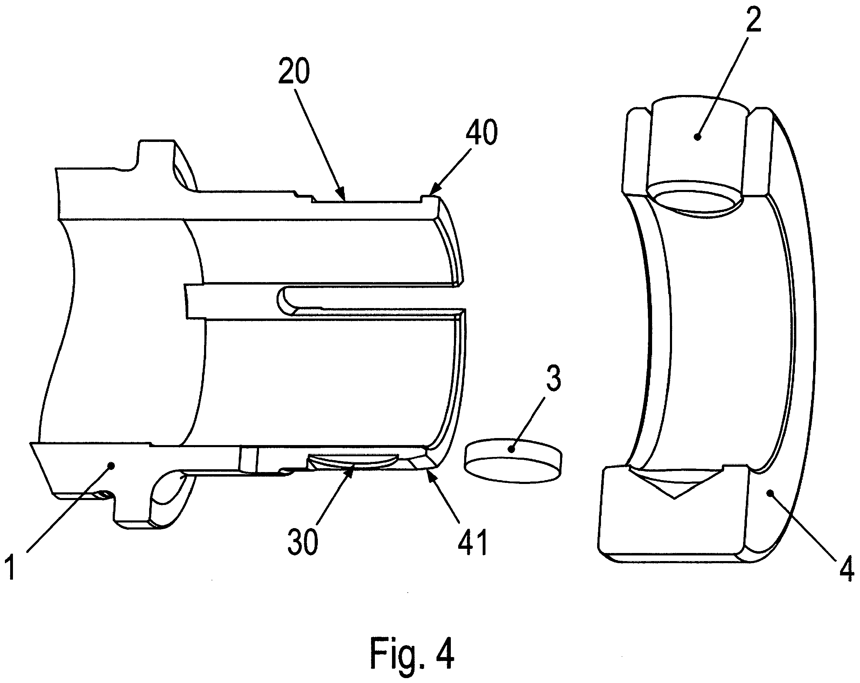

In der Figur 4 ist die Spanneinheit explodiert dargestellt.
In der Figur 5 ist die Spanneinheit vor dem Einführen der Adapterwelle 1 in den Spannring dargestellt.

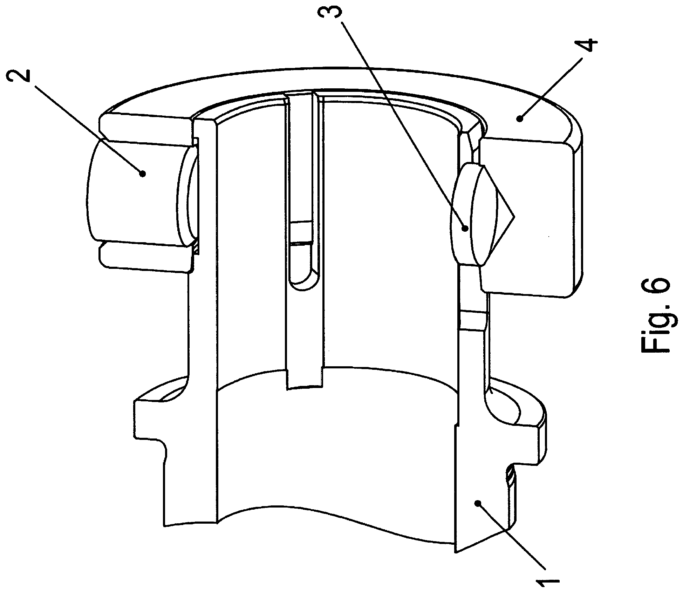

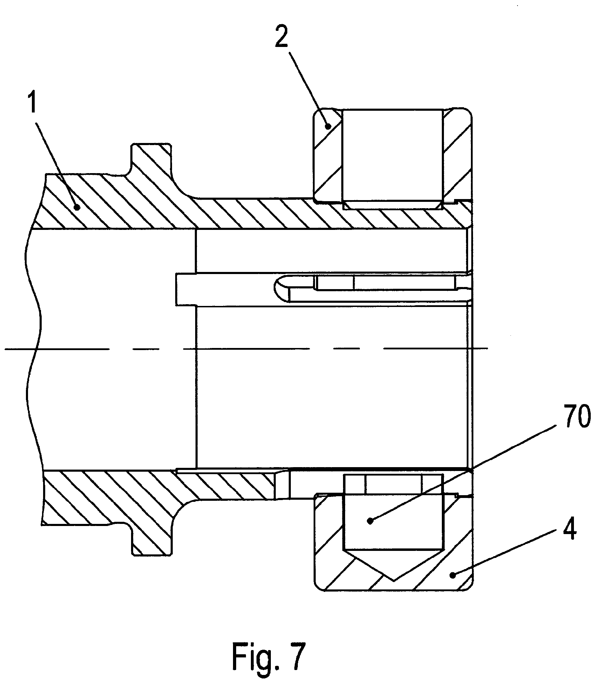

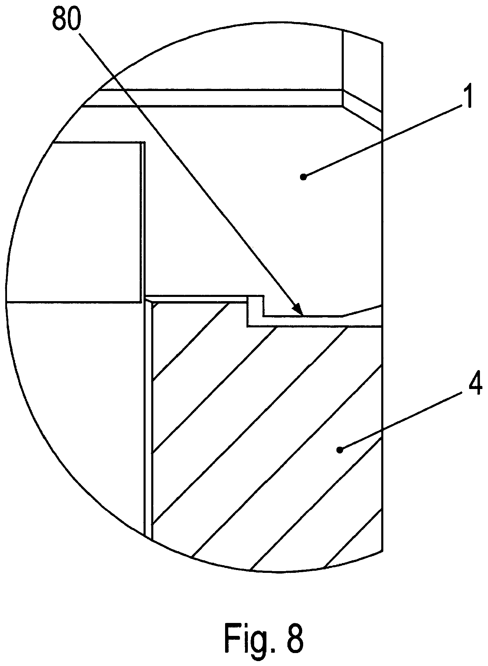

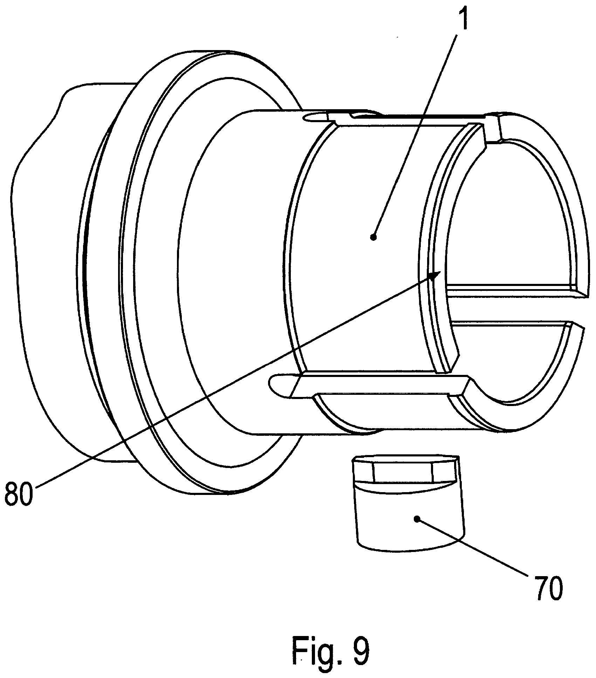

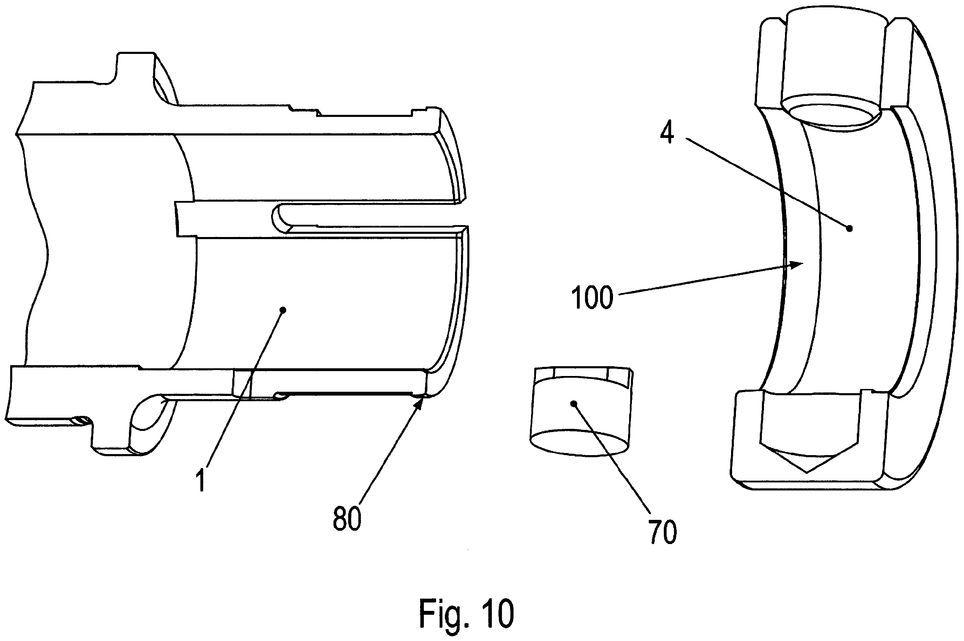

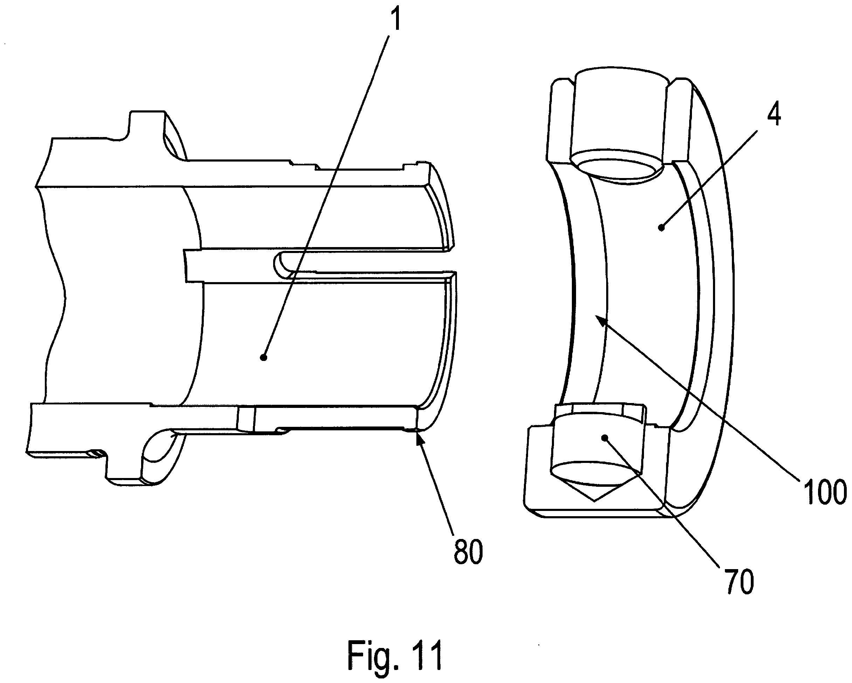

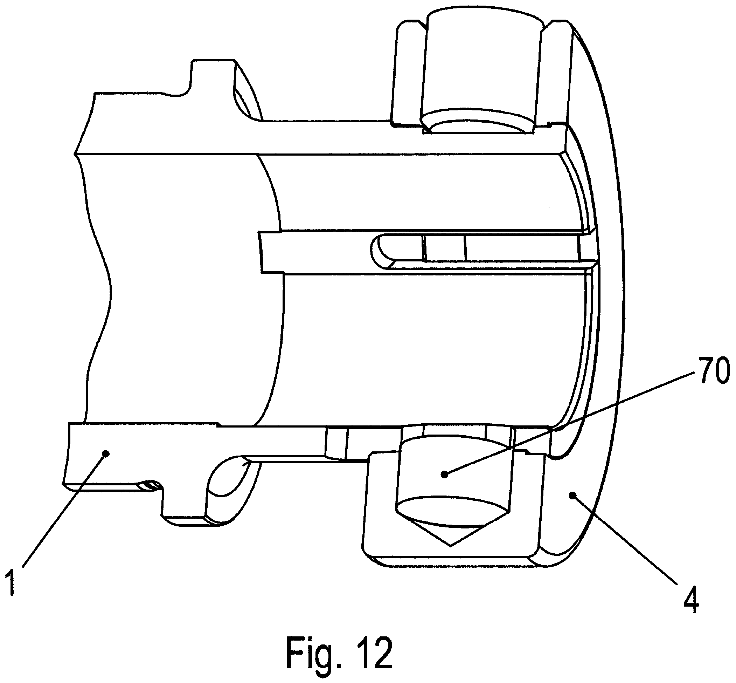

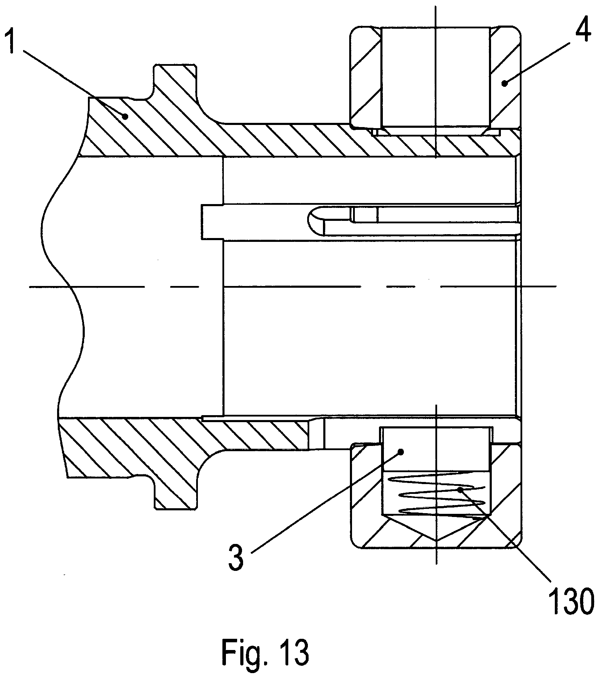

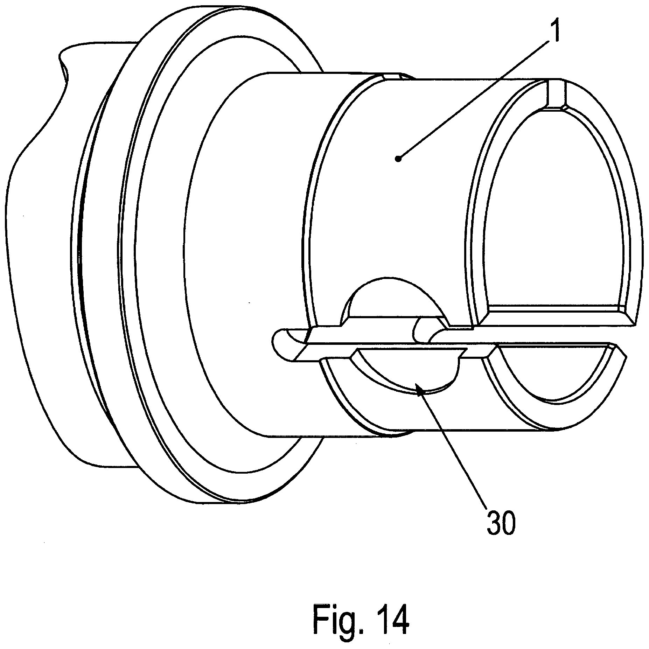

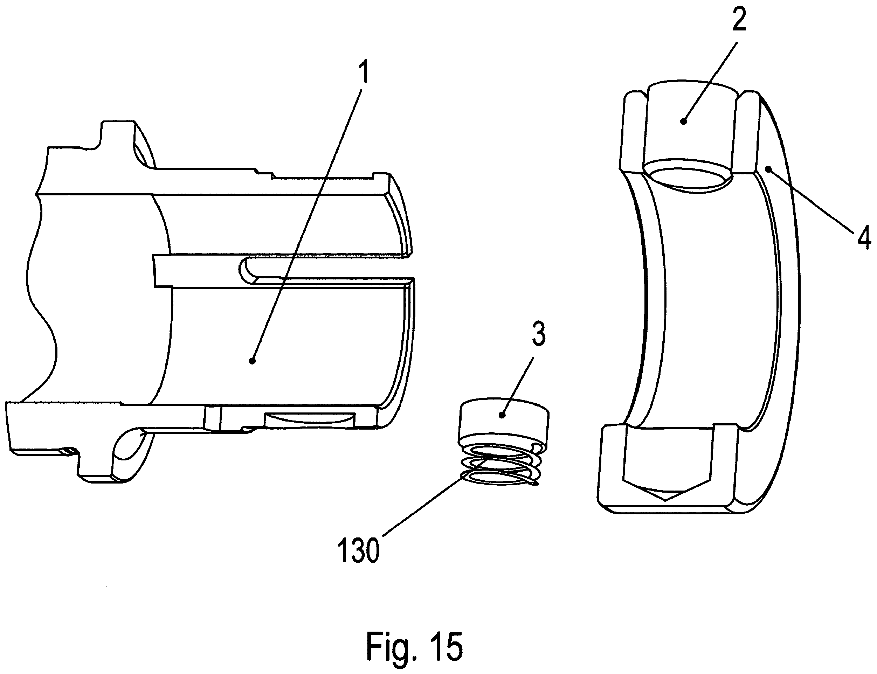

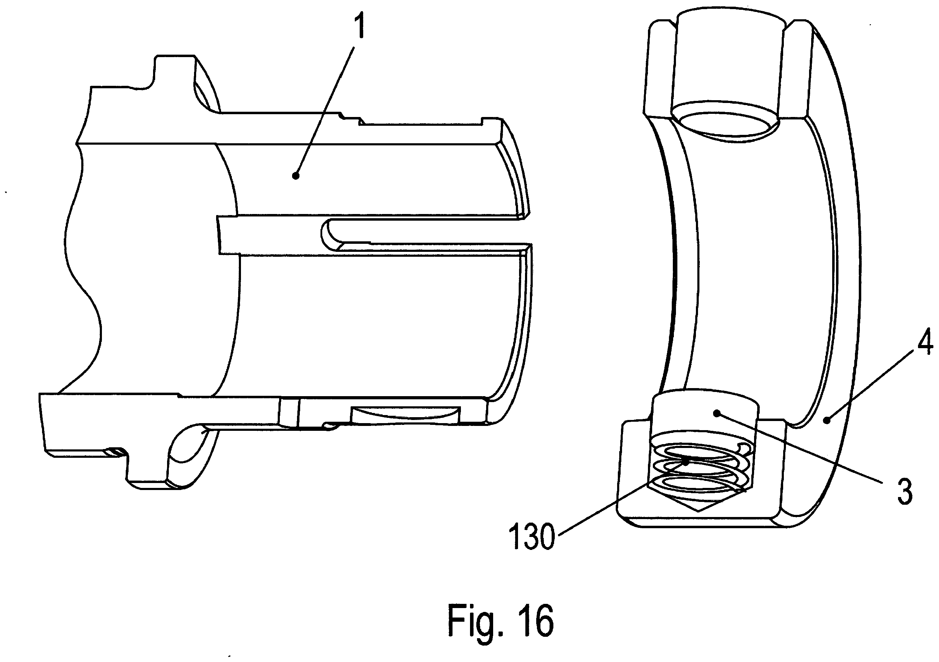

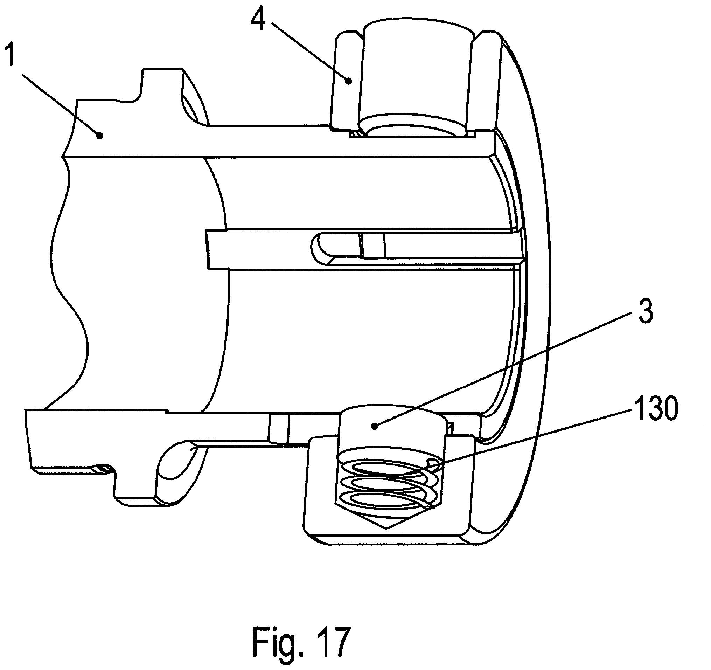

In der Figur 6 ist die Spanneinheit angeschnitten in Schrägansicht dargestellt. In den Figuren 7-17 sind Spanneinheiten dargestellt, die nicht Teil der Erfindung sind.

Wie in den Figuren dargestellt, weist die Adapterwelle 1 einen Hohlwellenbereich auf, der axial sich erstreckende Schlitze, also Axialschlitze, aufweist. Vorzugsweise sind die Axialschlitze voneinander in Umfangsrichtung regelmäßig beabstandet und erstrecken sich von dem axial äußeren ersten Endberiech der Adapterwelle 1 bis zu einer axialen Position, die außerhalb des von dem Spannring 4 überdeckten axialen Bereich angeordnet ist. Die bevorzugt gewählte Anzahl der Schlitze beträgt drei.

In die Adapterwelle 1 ist eine in den Figuren nicht dargestellte Vollwelle eingeführt. Somit wird diese Vollwelle von der Adapterwelle 1 radial umgeben.

Ein Gewindestift 2 ist in eine durch den Spannring 4 radial durchgehende Gewindebohrung eingeschraubt und drückt auf eine an der Adapterwelle 1 angeordnete Abflachung 20.

Die Abflachung 20 ist an der Außenseite der Adapterwelle 1 ausgeführt und tangential zur Mittelachse oder Drehachse der Adapterwelle ausgerichtet.

Im von der Abflachung 20 überdeckten axialen Bereich ist die Adapterwelle 1 an ihrem äußeren Umfang zylindrisch ausgeführt mit Ausnahme der Axialschlitze und einer weiteren Vertiefung mit Bodenfläche 30.

Der Gewindestift 2 drückt auf die Abflachung 20.

Somit ist mittels Einschrauben des Gewindestiftes 2 in die durch den Spannring durchgehende Gewindebohrung ein Andrücken der Adapterwelle 1 an die Vollwelle ermöglicht.

Vorzugsweise ist die insbesondere radial gerichtete Vertiefung mit Bodenfläche 30 diametral gegenüber von der Abflachung 20 angeordnet und dient als Andrückfläche für einen Zylinderbolzen 3, welcher in einer insbesondere radial gerichteten Vertiefung am Innenumfang des Spannrings 4 ausgebildet ist. Dabei greift der Zylinderbolzen 3 ein in die Vertiefung und ist mittels einer anderen Ausnehmung im Spannring gehalten.

Dadurch ist eine Verliersicherung in axialer Richtung und in Umfangsrichtung bewirkt.

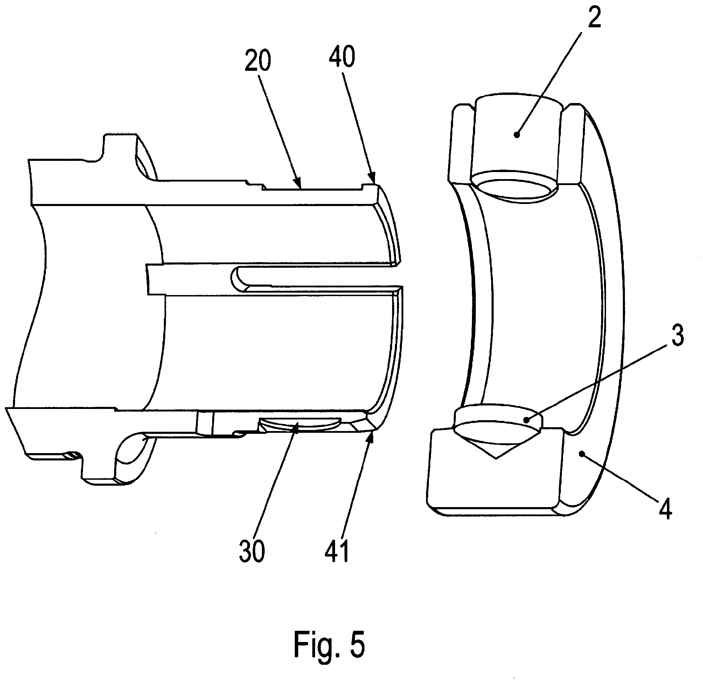

Wie in Figur 5 gezeigt, wird der Zylinderbolzen 3 zunächst in die insbesondere radial gerichtete Vertiefung am Innenumfang des Spannrings 4 eingelegt und dann der Spannring 4 auf die Adapterwelle 1 aufgeschoben. Dabei bewirkt eine Fase 41, die als Einführschräge wirkt, ein leichtgängiges Aufschieben der Adapterwelle 1 auf den im Spannring 4 aufgenommenen Zylinderbolzen 3. Bei diesem Aufschieben wird die Adapterwelle 1 elastisch verformt, insbesondere radial gedrückt. Infolge der Axialschlitze ist diese elastische Verformung mit geringem Kraftaufwand bewirkbar.

Sobald der Zylinderbolzen 3 die Vertiefung mit Bodenfläche 30 erreicht, wird er durch die von der elastischen Auslenkung erzeugt Gegenkraft in die Vertiefung gegen die Bodenfläche 30 gedrückt. Somit ragt dann ein Bereich des Zylinderbolzens 3 in die Vertiefung mit Bodenfläche 30 der Adapterwelle 1 hinein und ein anderer Bereich in die Vertiefung an der Innenwandung des Spannrings 4.

Die Fase 41 ist zwar im axialen Endbereich der Adapterwelle 1 angeordnet, also zwischen dem axialen Ende und der Vertiefung mit Bodenfläche 30. Die Fase 41 erstreckt sich in Umfangsrichtung nur teilweise, insbesondere überdeckt sie weniger als 180° in Umfangsrichtung. In dem restlichen, also nicht von der Fase 41 überdeckten Bereich in Umfangsrichtung ist ein radial hervorragender Wulst 40 ausgebildet, welcher sich aber nicht über den gesamten restlichen Umfangswinkelbereich erstrecken muss, sondern vorzugsweise nur über denjenigen Umfangswinkelbereich, welcher von der Abflachung 20 in Umfangsrichtung überdeckt wird.

Vorzugsweise ist der Wulst 40 dadurch gebildet, dass die Abflachung 20 in einen zylindrischen Bereich eingearbeitet wird und somit am Rand der Wulst 40 entsteht.

Der vom Wulst 40 axial überdeckte Bereich überlappt also mit dem von der Fase 41 axial überdeckten Bereich oder umfasst ihm. Dabei ist also der von Fase 41 überdeckte Radialabstandsberiech kleiner als der vom Wulst 40 überdeckte Radialabstandsbereich oder schließt sich an ihn radial an, insbesondere ist er also radial innerhalb angeordnet.

Die jeweilige Vertiefung umgibt somit den Zylinderbolzen 3 und fungiert somit als Verliersicherung.

Die Vertiefung mit Bodenfläche 30 ist vorzugsweise als Ansenkung in der Adapterwelle 1 ausgeführt.

Die Adapterwelle 1, der Gewindestift 2 und der Zylinderbolzen 3 sowie der Spannring 4 bilden somit ein System zur kraftschlüssigen Verbindung aus.

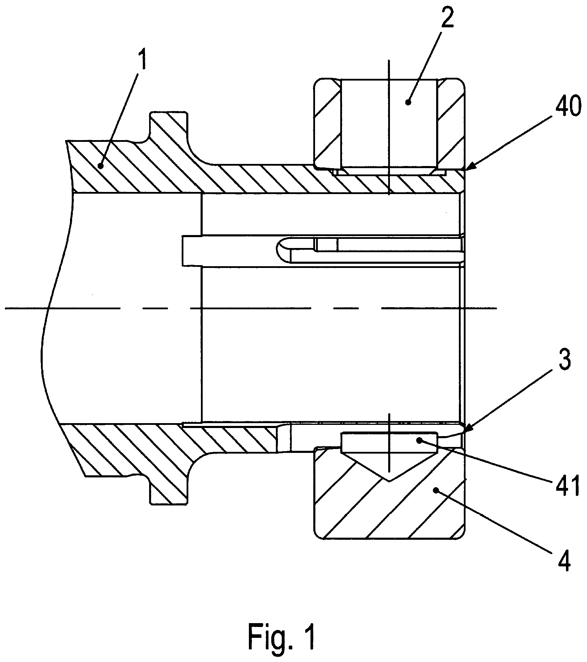

Im oberen Teil der Figur 1 ist sichtbar, dass der Spannring 4 auf dem Wulst 40 aufsitzt und im unteren, also diametral gegenüberliegenden Teil der Figur 1 ist die als Einführschräge 40 ausgebildete Fase 41 sichtbar, die vom Spannring 4 beabstandet ist. Denn der Wulst 40 ist radial weiter ausgedehnt als die Fase 41. Die Innenwandung des Spannrings 4 ist hingegen wie in Bereich eines Rotationskörpers ausgeführt, also mit in jeder axialen Position konstantem Radialabstand, also von der Umfangsposition unabhängigen Radialabstand.

Die Erfindung ermöglicht also eine Spannverbindung, insbesondere Schrumpfscheibenverbindung, zwischen einer Adapterwelle und einer Welle, insbesondere Vollwelle.

Der Wulst 40 ermöglicht also auch in axialer Richtung eine zusätzlich formschlüssige Begrenzung des Gewindestiftes 2.

### Bezugszeichenliste

1 Adapterwelle, insbesondere Hohlwellenbereich
2 Gewindestift
3 Zylinderbolzen
4 Spannring
20 Abflachung
30 Bodenfläche
40 Wulst
41 Fase

## Patentansprüche

1. Anordnung zur kraftschlüssigen Verbindung einer Adapterwelle (1) mit einer Welle mittels eines Spannrings (4),
wobei der Spannring (4) auf die Adapterwelle (1) aufgesteckt ist,
wobei die Welle in die Adapterwelle (1) eingesteckt ist,
wobei der Spannring (4) eine radial durchgehende Gewindebohrung aufweist, in welche ein Schraubteil, insbesondere Gewindestift (2), eingeschraubt ist, das auf die Adapterwelle (1) drückt, insbesondere auf eine Abflachung (20),
**wobei** ein Zylinderbolzen (3) in einer ersten Vertiefung des Spannrings (4) aufgenommen ist, welcher nach radial innen in eine zweite Vertiefung, die in die Adapterwelle (1) eingebracht ist, ragt, insbesondere hineinragt, insbesondere zur Bildung einer in Axialrichtung und in Umfangsrichtung wirkenden Verliersicherung und Verdrehsicherung,
**dadurch gekennzeichnet, dass**
**der Zylinderbolzen (3) als Scheibe ausgeführt ist.**

2. Anordnung nach Anspruch 1,
**dadurch gekennzeichnet, dass**
die Adapterwelle (1) Axialschlitze aufweist, insbesondere in Umfangsrichtung voneinander beabstandete Axialschlitze, insbesondere in Umfangsrichtung regelmäßig voneinander beabstandete Axialschlitze.

3. Anordnung nach mindestens einem der vorangegangenen Ansprüche,
**dadurch gekennzeichnet, dass**
die zweite Vertiefung mit einem der Axialschlitze überlappt,
insbesondere also der von der zweiten Vertiefung axial überdeckte Bereich überlappt mit dem von dem Axialschlitz axial überdeckten Bereich und/oder also der von der zweiten Vertiefung in Umfangsrichtung überdeckten Bereich überlappt mit dem von dem Axialschlitz in Umfangsrichtung überdeckten Bereich.

4. Anordnung nach mindestens einem der vorangegangenen Ansprüche,
**dadurch gekennzeichnet, dass**
**die Scheibe als vollzylindrische Scheibe ausgeführt ist.**

5. Anordnung nach mindestens einem der vorangegangenen Ansprüche,
**dadurch gekennzeichnet, dass**
die Welle in einen als Hohlwellenbereich ausgeführten Bereich der Adapterwelle (1) eingesteckt ist, insbesondere koaxial angeordnet ist zur Adapterwelle (1).

6. Anordnung nach mindestens einem der vorangegangenen Ansprüche,
**dadurch gekennzeichnet, dass**
die Axialschlitze am axialen Ende der Adapterwelle (1) in die Umgebungsluft münden.

7. Anordnung nach mindestens einem der vorangegangenen Ansprüche,
**dadurch gekennzeichnet, dass**
die erste Vertiefung und die zweite Vertiefung zueinander diametral angeordnet sind, insbesondere also ihre Schwerpunkte oder Mittelpunkte in Umfangsrichtung einen Abstand von 180° aufweisen.

8. Anordnung nach mindestens einem der vorangegangenen Ansprüche,
**dadurch gekennzeichnet, dass**
die Adapterwelle (1), insbesondere zwischen der zweiten Vertiefung und dem axialen Ende der Adapterwelle (1), an ihrem axialen Endbereich eine Fase (41), insbesondere Einführschräge, aufweist, welche beim Aufstecken des Spannrings (4) auf den Zylinderbolzen (3) zur zweiten Vertiefung hinführt.

9. Anordnung nach mindestens einem der vorangegangenen Ansprüche,
**dadurch gekennzeichnet, dass**
die Adapterwelle (1) in einem axialen Bereich zwischen dem von der zweiten Vertiefung axial überdeckten Bereich und dem axialen Ende der Adapterwelle (1) in dem von der zweiten Vertiefung in Umfangsrichtung überdeckten Bereich radial weniger ausgedehnt ist als in einem, insbesondere jedem, anderen, insbesondere in Umfangsrichtung, diametral gegenüberliegenden Bereich.

10. Anordnung nach mindestens einem der vorangegangenen Ansprüche,
**dadurch gekennzeichnet, dass**
der maximale Radialabstand der Adapterwelle (1) in einem axialen Bereich zwischen dem von der zweiten Vertiefung axial überdeckten Bereich und dem axialen Ende der Adapterwelle (1) vom von der zweiten Vertiefung in Umfangsrichtung überdeckten Bereich zum von der ersten Vertiefung in Umfangsrichtung überdeckten Bereich zunimmt.

11. Anordnung nach mindestens einem der vorangegangenen Ansprüche,
**dadurch gekennzeichnet, dass**
die erste Vertiefung rechteckförmig ausgeführt ist und/oder tangential ausgerichtet ist,
und/oder dass
die zweite Vertiefung rechteckförmig ausgeführt ist und/oder eine nicht durch die Adapterwelle (1) hindurchgehende insbesondere kreisrunde Sacklochbohrung aufweist.

12. Anordnung nach mindestens einem der vorangegangenen Ansprüche,
**dadurch gekennzeichnet, dass**
die Adapterwelle (1) eine Fase (41), insbesondere Einführfase, aufweist, welche in Umfangsrichtung einen Umfangswinkelbereich überdeckt, der den von der zweiten Vertiefung überdeckten Umfangswinkelbereich enthält,
wobei - in Umfangsrichtung beabstandet von der Fase - an der Adapterwelle (1) ein Wulst (40) ausgebildet ist, welcher einen axialen Beriech überdeckt, der den von der Fase überdeckten axialen Bereich enthält,
insbesondere wobei der von dem Wulst (40) in Umfangsrichtung überdeckte Beriech den von der Abflachung (20) in Umfangsrichtung überdeckten Bereich enthält,
insbesondere wobei der von der Fase überdeckte Radialabstandsbereich radial innerhalb von dem von dem Wulst (40) überdeckten Radialabstandsbereich angeordnet ist oder sich nach radial innen radial anschließt.

13. Anordnung nach mindestens einem der vorangegangenen Ansprüche,
**dadurch gekennzeichnet, dass**
der Verlauf des maximalen Radialabstands der Adapterwelle (1) in axialer Richtung ein lokales Minimum im von der zweiten Vertiefung überdeckten axialen Bereich aufweist.

14. Anordnung nach mindestens einem der vorangegangenen Ansprüche,
**dadurch gekennzeichnet, dass**
der von der ersten Vertiefung axial überdeckte Bereich mit dem von der zweiten Vertiefung axial überdeckten Bereich überlappt.

15. Anordnung nach mindestens einem der vorangegangenen Ansprüche,
**dadurch gekennzeichnet, dass**
der von der ersten Vertiefung in Umfangsrichtung überdeckte Bereich mit dem von der zweiten Vertiefung in Umfangsrichtung überdeckten Bereich überlappt.

## Claims

1. An arrangement for the force-locking connection of an adapter shaft (1) to a shaft by means of a clamping ring (4),
wherein the clamping ring (4) is mounted on the adapter shaft (1),
wherein the shaft is inserted into the adapter shaft (1),
wherein the clamping ring (4) has a radially uninterrupted threaded bore into which is screwed a screwing part, in particular grub screw (2), which presses on the adapter shaft (1), in particular on a flattened portion (20),
wherein a cylinder bolt (3) is received in a first indentation of the clamping ring (4), which cylinder bolt extends, in particular extends into, radially inwards into a second indentation which is formed in the adapter shaft (1), in particular for forming a lossprevention and anti-twist means which acts in the axial direction and in the peripheral direction,
**characterised in that**
the cylinder bolt (3) is embodied as a disc.

2. An arrangement according to claim 1,
**characterised in that**
the adapter shaft (1) has axial slots, in particular axial slots spaced apart from each other in the peripheral direction, in particular axial slots spaced apart regularly from each other in the peripheral direction.

3. An arrangement according to at least one of the preceding claims,
**characterised in that**
the second indentation overlaps with one of the axial slots,
in particular therefore the region axially covered by the second indentation overlaps with the region axially covered by the axial slot and/or therefore the region covered by the second indentation in the peripheral direction overlaps with the region covered by the axial slot in the peripheral direction.

4. An arrangement according to at least one of the preceding claims,
**characterised in that**
the disc is embodied as a solid-cylindrical disc.

5. An arrangement according to at least one of the preceding claims,
**characterised in that**
the shaft is inserted into a region of the adapter shaft (1) embodied as a hollow-shaft region, in particular is arranged coaxially with the adapter shaft (1).

6. An arrangement according to at least one of the preceding claims,
**characterised in that**
the axial slots at the axial end of the adapter shaft (1) open into the ambient air.

7. An arrangement according to at least one of the preceding claims,
**characterised in that**
the first indentation and the second indentation are arranged diametrically opposite each other, in particular therefore their centres of gravity or mid-points are at a spacing of 180° in the peripheral direction.

8. An arrangement according to at least one of the preceding claims,
**characterised in that**
the adapter shaft (1), in particular between the second indentation and the axial end of the adapter shaft (1), has on its axial end region a chamfer (41), in particular lead-in slope, which when the clamping ring (4) is mounted on the cylinder bolt (3) leads to the second indentation.

9. An arrangement according to at least one of the preceding claims,
**characterised in that**
the adapter shaft (1), in an axial region between the region axially covered by the second indentation and the axial end of the adapter shaft (1) in the region covered by the second indentation in the peripheral direction, has a radially lesser extension than in a, in particular any, other diametrically opposite region, in particular in the peripheral direction.

10. An arrangement according to at least one of the preceding claims,
**characterised in that**
the maximum radial distance of the adapter shaft (1), in an axial region between the region axially covered by the second indentation and the axial end of the adapter shaft (1), increases from the region covered by the second indentation in the peripheral direction to the region covered by the first indentation in the peripheral direction.

11. An arrangement according to at least one of the preceding claims,
**characterised in that**
the first indentation is rectangular and/or is oriented tangentially,
and/or **in that**
the second indentation is rectangular and/or has an in particular circular blind bore which does not pass through the adapter shaft (1).

12. An arrangement according to at least one of the preceding claims,
**characterised in that**
the adapter shaft (1) has a chamfer (41), in particular lead-in chamfer, which in the peripheral direction covers an angle-at-circumference region which contains the angle-at-circumference region covered by the second indentation,
with - in the peripheral direction spaced apart from the chamfer - on the adapter shaft (1) there being formed a bead (40) which covers an axial region which contains the axial region covered by the chamfer,
in particular with the region covered by the bead (40) in the peripheral direction containing the region covered by the flattened portion (20) in the peripheral direction,
in particular with the radial distance region covered by the chamfer being arranged radially within the radial distance region covered by the bead (40) or radially adjoining it radially inwards.

13. An arrangement according to at least one of the preceding claims,
**characterised in that**
the course of the maximum radial distance of the adapter shaft (1) in the axial direction has a local minimum in the axial region covered by the second indentation.

14. An arrangement according to at least one of the preceding claims,
**characterised in that**
the region axially covered by the first indentation overlaps with the region axially covered by the second indentation.

15. An arrangement according to at least one of the preceding claims,
**characterised in that**
the region covered by the first indentation in the peripheral direction overlaps with the region covered by the second indentation in the peripheral direction.

## Revendications

1. Agencement conçu pour relier un arbre adaptateur (1) à un arbre avec engagement positif, au moyen d'une bague de serrage (4),
ladite bague de serrage (4) étant emboîtée sur l'arbre adaptateur (1),
l'arbre étant emboîté dans ledit arbre adaptateur (1),
sachant que ladite bague de serrage (4) est munie d'un perçage taraudé radialement ininterrompu dans lequel est vissé(e) une partie vissable, en particulier un goujon fileté (2) exerçant une pression sur l'arbre adaptateur (1), notamment sur un méplat (20),
sachant qu'un tenon cylindrique (3) logé dans un premier renfoncement de la bague de serrage (4) dépasse vers l'intérieur dans le sens radial, en particulier avec pénétration, dans un second renfoncement pratiqué dans l'arbre adaptateur (1), notamment de manière à former une sûreté antiperte et un arrêt antirotation agissant dans la direction axiale et dans la direction périphérique,
**caractérisé par le fait que**
le tenon cylindrique (3) est réalisé sous la forme d'un disque.

2. Agencement selon la revendication 1,
**caractérisé par le fait que**
l'arbre adaptateur (1) comporte des fentes axiales, notamment des fentes axiales distantes les unes des autres dans la direction périphérique, en particulier des fentes axiales distantes régulièrement les unes des autres dans la direction périphérique.

3. Agencement selon au moins l'une des revendications précédentes,
**caractérisé par le fait que**
le second renfoncement est en chevauchement avec l'une des fentes axiales, c'est-à-dire, en particulier, que la région couverte axialement par le second renfoncement est en chevauchement avec la région couverte axialement par la fente axiale, et/ou que la région couverte par ledit second renfoncement, dans la direction périphérique, est en chevauchement avec la région couverte par ladite fente axiale dans la direction périphérique.

4. Agencement selon au moins l'une des revendications précédentes,
**caractérisé par le fait que**
le disque est réalisé sous la forme d'un disque entièrement cylindrique.

5. Agencement selon au moins l'une des revendications précédentes,
**caractérisé par le fait que**
l'arbre est emboîté dans une région de l'arbre adaptateur (1) réalisée sous la forme d'une zone d'arbre creux et est disposé, en particulier, coaxialement audit arbre adaptateur (1).

6. Agencement selon au moins l'une des revendications précédentes,
**caractérisé par le fait que**
les fentes axiales débouchent dans l'air environnant à l'extrémité axiale de l'arbre adaptateur (1).

7. Agencement selon au moins l'une des revendications précédentes,
**caractérisé par le fait que**
le premier renfoncement et le second renfoncement sont disposés diamétralement l'un par rapport à l'autre,
c'est-à-dire, en particulier, que leurs centres de gravité ou leurs points centraux présentent un espacement de 180° dans la direction périphérique.

8. Agencement selon au moins l'une des revendications précédentes,
**caractérisé par le fait que**
l'arbre adaptateur (1) est pourvu au niveau de sa région extrême axiale, en particulier entre le second renfoncement et l'extrémité axiale dudit arbre adaptateur (1), d'un chanfrein (41) et notamment d'un biseau d'insertion qui mène audit second renfoncement lors de l'emboîtement de la bague de serrage (4) sur le tenon cylindrique (3).

9. Agencement selon au moins l'une des revendications précédentes,
**caractérisé par le fait que**
l'arbre adaptateur (1) présente, dans une région axiale entre la région couverte axialement par le second renfoncement et l'extrémité axiale dudit arbre adaptateur (1), dans la région couverte par le second renfoncement dans la direction périphérique, une extension radiale moindre que dans une région, notamment dans chaque autre région occupant un emplacement diamétralement opposé, en particulier dans la direction périphérique.

10. Agencement selon au moins l'une des revendications précédentes,
**caractérisé par le fait que**,
dans une région axiale entre la région couverte axialement par le second renfoncement et l'extrémité axiale de l'arbre adaptateur (1), l'espacement radial maximal dudit arbre adaptateur (1) croît à partir de la région couverte par ledit second renfoncement, dans la direction périphérique, vers la région couverte par le premier renfoncement dans la direction périphérique.

11. Agencement selon au moins l'une des revendications précédentes,
**caractérisé par le fait que**
le premier renfoncement est de réalisation rectangulaire, et/ou est orienté tangentiellement ;
et/ou **par le fait que**
le second renfoncement est de réalisation rectangulaire, et/ou est muni d'un perçage qui ne traverse pas intégralement l'arbre adaptateur (1), en particulier d'un perçage borgne circulaire.

12. Agencement selon au moins l'une des revendications précédentes,
**caractérisé par le fait que**
l'arbre adaptateur (1) est muni d'un chanfrein (41), en particulier d'un biseau d'insertion qui couvre, dans la direction périphérique, une plage d'angles circonférentiels incluant la plage d'angles circonférentiels couverte par le second renfoncement,
sachant qu'un bourrelet (40), façonné sur ledit arbre adaptateur (1) - à distance dudit chanfrein dans la direction périphérique -, couvre une région axiale incluant la région axiale couverte par ledit chanfrein,
sachant notamment que la région couverte par ledit bourrelet (40), dans la direction périphérique, inclut la région couverte par le méplat (20) dans la direction périphérique, sachant, en particulier, que la zone d'espacement radial couverte par ledit chanfrein est située, dans le sens radial, à l'intérieur de la zone d'espacement radial couverte par ledit bourrelet (40), ou occupe un emplacement contigu vers l'intérieur dans le sens radial.

13. Agencement selon au moins l'une des revendications précédentes,
**caractérisé par le fait que**
le profil de l'espacement radial maximal de l'arbre adaptateur (1) présente, dans le sens axial, un minimum local dans la région axiale couverte par le second renfoncement.

14. Agencement selon au moins l'une des revendications précédentes,
**caractérisé par le fait que**
la région couverte par le premier renfoncement, dans le sens axial, est en chevauchement avec la région couverte par le second renfoncement dans le sens axial.

15. Agencement selon au moins l'une des revendications précédentes,
**caractérisé par le fait que**
la région couverte par le premier renfoncement, dans la direction périphérique, est en chevauchement avec la région couverte par le second renfoncement dans la direction périphérique.
